Europäisches Patentamt

**European Patent Office**

Office européen des brevets

(11) Numéro de publication: **0 122 200**
**A1**

(12) ## DEMANDE DE BREVET EUROPEEN

(21) Numéro de dépôt: **84400681.7**

(22) Date de dépôt: **06.04.84**

(51) Int. Cl.³: **B 21 D 1/14,** G 01 B 5/20

(30) Priorité: **06.04.83 FR 8305578**

(43) Date de publication de la demande: **17.10.84**
**Bulletin 84/42**

(84) Etats contractants désignés: **BE DE GB IT SE**

(71) Demandeur: **CELETTE S.A., 67 rue Maugiron
B.P. 9 Vienne-Estressin, F-38206 Vienne Cedex (FR)**

(72) Inventeur: **Celette, Germain, 67, rue Maugiron,
F-38206 Vienne (FR)**

(74) Mandataire: **Tony-Durand, Serge, Cabinet
Tony-Durand 22, Boulevard Voltaire, F-75011 Paris (FR)**

(54) **Appareillage pour le montage d'une carrosserie de voiture sur un marbre de contrôle.**

(57)    Appareillage pour le montage d'une carrosserie de voiture accidentée sur un marbre de contrôle.

Cet appareillage comprend deux traverses (5 et 5a) portées par des flasques verticaux (9, 9a) situés à leurs extrémités et solidaires de deux platines (10, 10a) de fixation. La
première traverse (5) est destinée à être fixée directement
sur les trous (13) des longerons (11) du marbre de contrôle
(1). Quant à la seconde traverse (5a), elle est fixée sur ceux-
ci par l'intermédiaire de deux semelles (30), et sa position de
fixation est réglable. De plus, il est prévu quatre supports (14,
14a) de carrosserie montés coulissant sur ces traverses (5,
5a) et aptes à recevoir des organes amovibles (15, 15a) de
positionnement, spécifiques à chaque type de carrosserie.

L'agencement est tel que les deux traverses soient suffisamment surélevées pour permettre la mise en place, sous
celle-ci, du châssis horizontal (2) d'un appareil de mesure
pouvant reposer sur les longerons du marbre de contrôle et
utilisé pour effectuer les diverses vérifications nécessaires.

1

"APPAREILLAGE POUR LE MONTAGE D'UNE CARROSSERIE DE VOITURE
SUR UN MARBRE DE CONTROLE"

La présente invention concerne le montage
de la carrosserie d'une voiture accidentée sur un marbre
de contrôle dans le but de pouvoir procéder aux vérifications indispensables au moyen d'appareils de mesure appropriés.

Il existe déjà de nombreux dispositifs permettant de fixer une carrosserie sur un banc de contrôle afin
d'opérer sur celle-ci les vérifications voulues et éventuellement les réparations qui s'avéreraient nécessaires.
Ces dispositifs comprennent en général des pinces ou
mâchoires de fixation aptes à saisir certains points déterminés de la carrosserie,par exemple le bas de celle-ci.
Ces dispositifs permettent un assujettissement extrêmement
robuste de la carrosserie sur le banc de contrôle afin
de pouvoir procéder ensuite à des opérations de redressement des parties endommagées de la carrosserie. Cependant,
ces dispositifs sont inutilement compliqués et onéreux
dans le cas d'un contrôle préalable des déformations éventuelles d'une carrosserie. En effet dans un tel cas il
suffit que celle-ci soit placée dans une position précise
sur le banc de contrôle pour que l'on puisse ensuite  effectuer les vérifications nécessaires avec des appareils
de mesure.

La présente invention a donc pour objet un
appareillage spécialement conçu dans ce but et qui est agencé pour permettre l'emploi d'un appareil de mesure constitué
par un châssis horizontal en forme de cadre portant une
série de piges de contrôle montées mobiles sur les côtés
de ce châssis.

A cet effet l'appareillage selon l'invention
comprend, en combinaison :

- une première traverse portée par deux flasques verticaux solidaires de deux platines susceptibles
d'être fixées sur les trous des longerons du marbre de
contrôle;

0122200

2

- deux semelles destinées à être fixées dans le sens longitudinal sur ces mêmes longerons ;

- une seconde traverse, également portée par des flasques verticaux solidaires de deux platines pouvant être fixés, en des positions réglables, sur ces semelles qui comportent des trous modulaires dans le sens de leur longueur ;

- quatre supports de carrosserie montés coulissant sur ces traverses et aptes à recevoir des organes amovibles de positionnement, spécifiques à chaque type de carrosserie, et destinées à coopérer avec des parties déterminées de la carrosserie ;

- l'agencement étant tel que les deux traverses soient suffisamment surélevées pour permettre la mise en place, sous celles-ci, du châssis horizontal d'un appareil de mesure pouvant reposer sur les longerons du marbre de contrôle.

Ainsi, grâce à cet appareillage il est possible de procéder aux vérifications voulues en utilisant un appareil de mesure tel que rappelé précédemment, c'est-à-dire un appareil comportant un châssis en forme de cadre pourvu d'un certain nombre de piges mobiles de contrôle. Cependant l'appareillage selon l'invention permet d'effectuer une mise en place précise de la carrosserie à contrôler, ce qui est justement indispensable pour pouvoir effectuer les vérifications voulues. Or, cette mise en place précise peut être réalisée avec n'importe quel type de voiture car il suffit de changer les organes amovibles de positionnement spécifiques à chaque type de carrosserie et de se conformer aux indications fournies par un tableau de mesures et de consignes, également spécifique à chaque type de carrosserie.

Cependant d'autres particularités et avantages de l'appareillage selon l'invention apparaîtront au cours de la description suivante. Celle-ci est donnée en référence au dessin annexé à simple titre indicatif, et sur lequel :

3

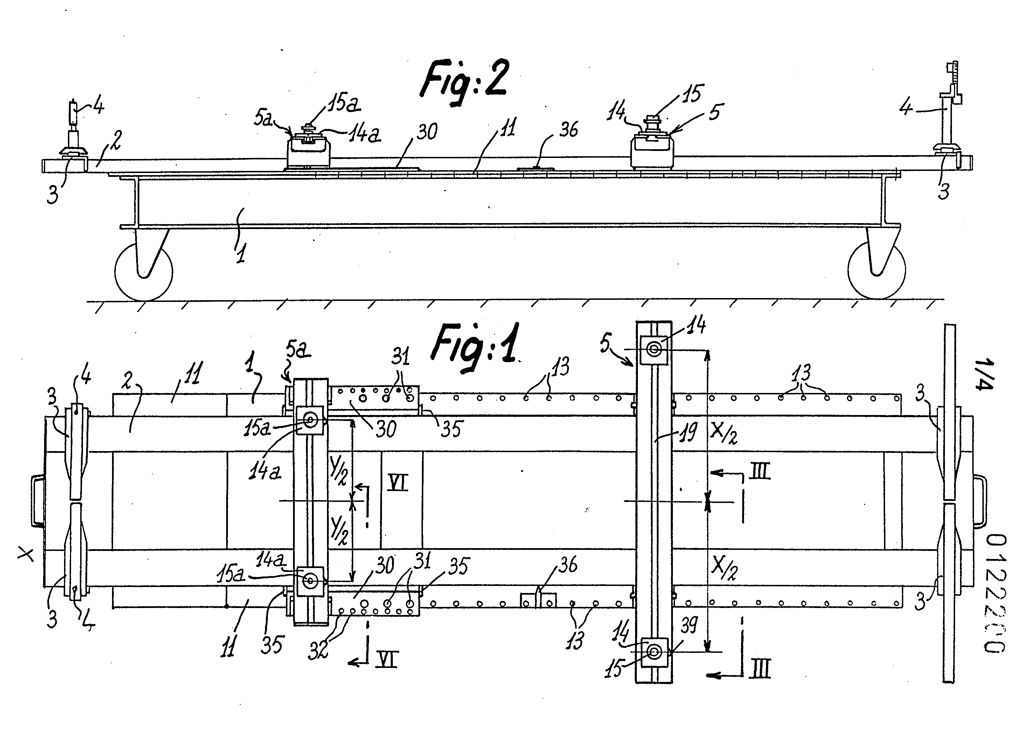

- La figure 1 est une vue en plan de dessus d'un marbre de contrôle équipé d'un appareillage selon l'invention,ainsi que d'un appareil de mesure dont le châssis est engagé sous les traverses de cet appareillage.

- La figure 2 en est une vue en élévation de côté.

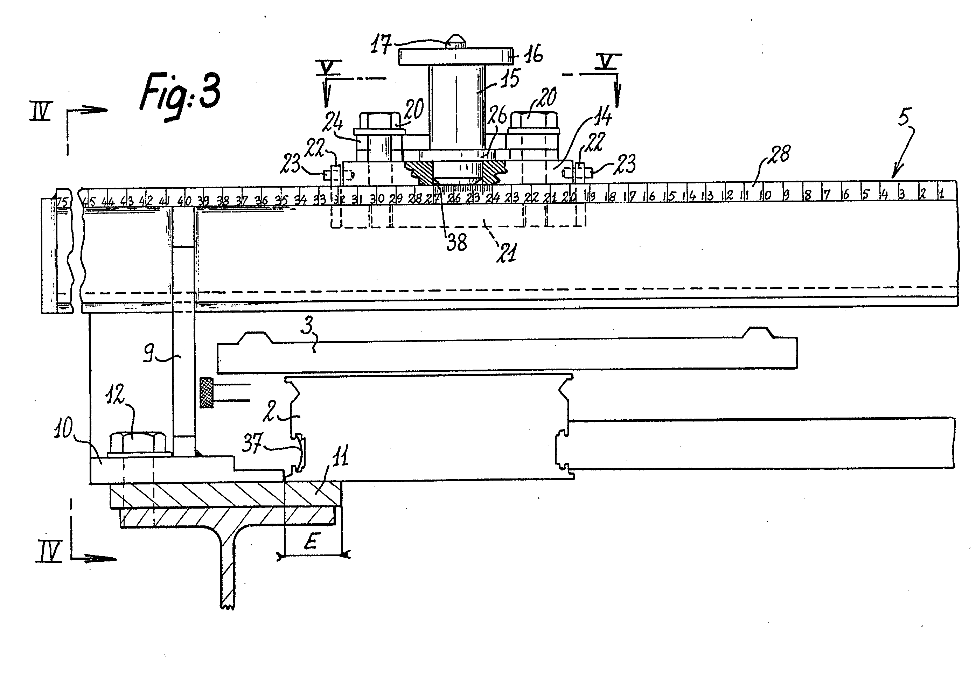

- La figure 3 est une vue partielle en coupe selon la ligne III-III de la figure 1, mais à échelle différente.

- La figure 4 est une vue partielle en coupe selon une ligne IV-IV de la figure 3.

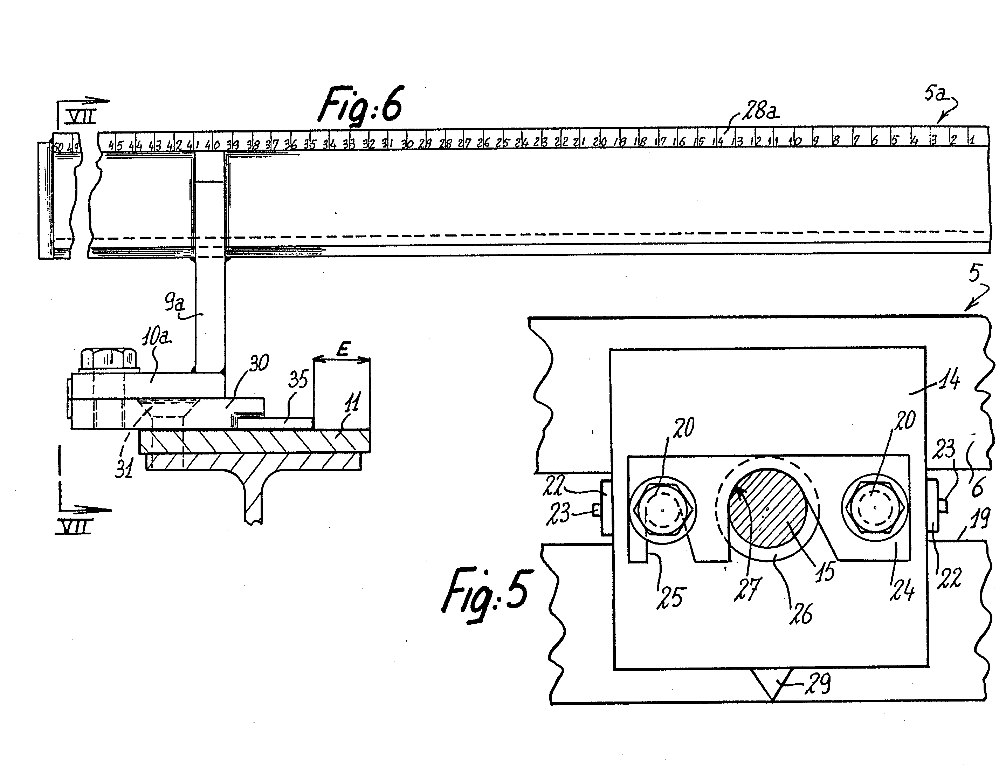

- La figure 5 est une vue partielle en coupe selon la ligne V-V de la figure 3.

- La figure 6 est une vue partielle en coupe selon la ligne VI-VI de la figure 1, mais à échelle différente.

- La figure 7 est une vue en coupe selon la ligne VII-VII de la figure 6.

- La figure 8 est une vue en coupe selon la ligne VIII-VIII de la figure 7.

L'appareillage représenté est destiné à permettre le montage d'une carrosserie de voiture automobile (non représentée) sur un marbre de contrôle 1 afin de pouvoir procéder aux vérifications voulues au moyen d'un appareil de mesure constitué par un châssis horizontal 2 en forme de cadre sur les deux côtés duquel sont montés plusieurs supports coulissant 3 portant des piges de contrôle 4 ou autres organes appropriés permettant de contrôler la position précise de certains points déterminés d'une carrosserie.

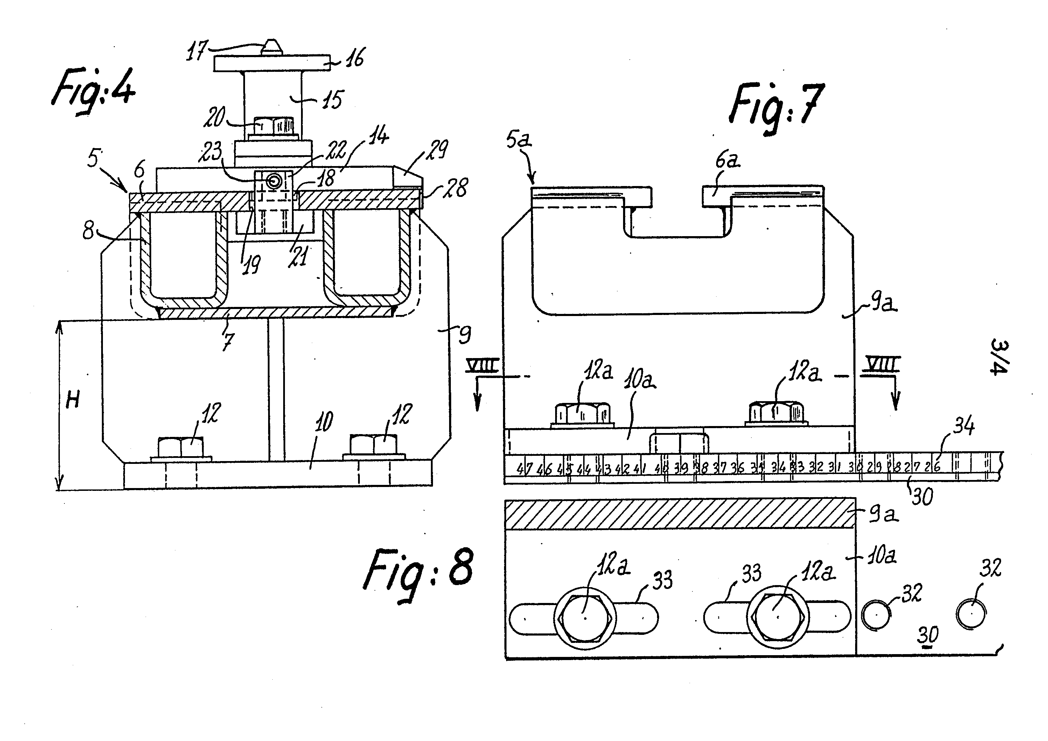

Le présent appareillage comprend une première traverse désignée par la référence générale 5. Cette traverse est creuse et peut être constituée par deux fers plats 6 et 7 réunis par des profilés métalliques 8 réservant entre eux un espace libre (voir figure 4). Les extrémités de cette traverse sont fixées sur deux flasques verticaux 9 dont

4

chacun est solidaire d'une platine de fixation 10.

L'écartement existant entre les deux flasques 9 d'extrémité est tel que leurs platines 10 puissent être fixées sur le dessus des longerons 11 du marbre de contrôle 1. Cette fixation est assurée au moyen de boulons 12 vissés dans les trous 13, à espacement modulaire, prévus dans les longerons 11. Ainsi la position de fixation de la traverse 5 peut être choisie pour que celle-ci soit en mesure de supporter la partie arrière de la carrosserie correspondante, au voisinage de l'emplacement des roues arrière.

Cependant la position de cette traverse ne peut varier que d'une distance égale à l'intervalle modulaire existant entre deux trous 13 des longerons du marbre de contrôle.

Sur cette traverse sont montés deux supports mobiles 14 destinés à supporter le dessous de la carrosserie à monter en place. Chacun de ces supports comporte un évidement 38 dans lequel peut être disposé un organe destiné à servir de support proprement dit et d'élément de positionnement pour la carrosserie correspondante. Comme prévu dans l'exemple représenté, cet organe peut consister en un plot 15 dont l'extrémité supérieure comporte une collerette 16 ainsi qu'un téton 17 destiné à être engagé dans un trou déterminé prévu à cet effet dans la surface inférieure de la carrosserie. Les organes 15 ainsi rapportés sur les supports mobiles 14 doivent donc être spécifiques à chaque type de carrosserie.

Les supports 14 sont montés coulissant le long de la traverse 5 et ils sont guidés sur celle-ci par des nervures 18 prévues sur leur face inférieure et qui sont engagées à l'intérieur d'une fente longitudinale 19 du barreau supérieur 6 de cette traverse. L'immobilisation de ces supports dans la position voulue est assurée au moyen de deux boulons 20 vissés dans une plaque de serrage 21 disposée contre la face inférieure du barreau 6, ces boulons étant engagés dans la fente longitudinale 19. La plaque 21

5

est de plus reliée au support 14 correspondant par l'intermédiaire de deux pattes 22 s'articulant autour d'axes 23 portés par les extrémités de chacun de ces supports.

Cependant l'agencement est tel que les boulons 20 puissent assurer non seulement l'immobilisation de chacun des supports 14 dans la position voulue, mais également la fixation en place de l'organe 15 de support et de positionnement de la carrosserie. A cet effet une bride 24 de verrouillage est montée pivotante, à l'une de ses extrémités, autour de l'un de ces boulons. A son extrémité opposée cette bride comporte une encoche 25 permettant de l'engager sous l'autre boulon 20. Ces deux boulons étant disposés de part et d'autre de l'emplacement prévu pour l'organe de positionnement 15, la bride de verrouillage 24 peut ainsi être disposée au-dessus d'une collerette 26 portée par la base de celui-ci, la partie médiane de cette bride présentant une autre encoche 27 pour le passage de l'organe de positionnement 15 correspondant. Ainsi, ces organes peuvent être très facilement et rapidement montés en place et verrouillés sur les supports mobiles 14.

La position de ceux-ci dans le sens transversal peut être réglée avec précision grâce à une double graduation 28 prévue sur l'un des chants de la traverse 5. Pour permettre un repérage précis chacun des supports mobiles 14 présente un index 29 se déplaçant en regard de cette graduation. Le zéro de celle-ci se trouve situé au milieu de la traverse 5 de sorte que pour un entraxe X déterminé il suffit que les index 29 des deux supports mobiles 14 soient placés en regard du chiffre de l'une ou l'autre partie de cette graduation qui correspond à la moitié de cet entraxe.

Le présent appareillage comprend une seconde traverse 5a de même structure générale que la précédente, mais de longueur plus faible, cette traverse étant destinée à servir de support au longeron avant de la carrosserie à

6

fixer en place. Cependant, contrairement à ce .qui est le cas pour la première traverse 5, cette seconde traverse 5a n'est pas fixée directement dans une position déterminée sur les longerons du marbre de contrôle. En effet, elle est fixée sur ceux-ci par l'intermédiaire de deux semelles 30.

Mais en dehors de ces différences qui seront explicitées ci-dessous, la structure générale de cette traverse est la même que celle de la traverse 5 et elle comporte les mêmes organes et accessoires qui sont donc désignés par les mêmes chiffres de référence simplement affectés de l'indice "a". Ainsi les extrémités de cette traverse 5a sont portées par des flasques verticaux 9a solidaires de platines de fixation 10a. Le barreau supérieur 6a de cette traverse porte deux supports mobiles 14a sur lesquels peuvent être adaptés des organes de positionnement 15a. La position exacte de ces supports peut être déterminée grâce à une graduation 28a prévue sur le chant de la traverse 5a.

Les semelles 30, servant d'éléments intermédiaires pour la fixation des extrémités de la traverse 5a, sont constituées par des barreaux métalliques plats destinés à être disposés dans le sens longitudinal au-dessus des longerons 11 du marbre de contrôle. La fixation de ces semelles est assurée par des vis 31 à tête fraisée.

Quant à la fixation des platines 10a sur les semelles 30 elle est assurée au moyen de boulons 12a vissés dans des trous taraudés 32 prévus dans celle-ci. Cependant il convient de noter que ces boulons sont engagés à travers des fentes longitudinales 33 ménagées dans les platines 10a,ce qui permet de parfaire le réglage de la position exacte de la traverse 5a dans le sens longitudinal. Il faut également observer que les semelles 30 présentent sur toute leur longueur une série de trous 32 dont l'espacement modulaire est nettement plus faible que celui des trous 13 des longerons 11 du marbre afin de permettre un premier réglage de la posi-

7

tion de la traverse 5a dans le sens longitudinal, le réglage final étant assuré par coulissement dans les fentes 33. Pour permettre le réglage voulu les semelles 30 présentent chacune une graduation 34 située sur leur chant extérieur ou sur le dessus.

Du fait que les deux traverses 5 et 5a sont portées par des platines verticales 9 et 9a, elles se trouvent disposées à une hauteur H par rapport au-dessus des longerons 11 du marbre de contrôle. Ceci permet d'engager, au-dessous de ces traverses, le châssis 2 de l'appareil de mesure utilisé pour effectuer les diverses vérifications voulues. A ce sujet il convient de noter que les platines 10, assurant la fixation de la première traverse 5, n'occupent pas toute la largeur du longeron 11 du marbre. En effet elles laissent, du côté interne, une marge libre E afin qu'il soit possible de faire reposer les longs côtés 2 du châssis de l'appareil de mesure sur les longerons 11. Quant aux semelles 30, elles portent chacune deux butées de guidage 35 disposées à leurs extrémités et qui réservent également une marge libre E sur le dessus des longerons 11. Ces butées, ainsi que le bord interne des platines 10, assurent le guidage du châssis 2 de l'appareil de mesure lors de sa mise en place. Celui-ci peut alors être convenablement glissé sur le dessus des longerons 11 qui le supporteront.

De préférence il est prévu, sur l'un de ces longerons, un repère 36 d'indexation destiné à indiquer une cote de référence sur une graduation 37 prévue sur le côté du châssis de l'appareil de mesure. Ceci permet d'établir une relation précise entre cet appareil et les deux traverses 5 et 5a de l'appareillage selon l'invention.

Du fait de sa conception, cet appareillage présente un grand nombre d'avantages. Parmi ceux-ci, il convient de noter les suivants :

8

a) - Les quatre points d'appui de la carrosserie sur les organes de positionnement 15 n'ont plus à être contrôlés par l'appareil de mesure 2, ce qui libère donc la totalité des piges ou autres organes de contrôle de cet appareil dans la zone considérée,

b) - le présent appareillage peut être utilisé pour des véhicules de typesdifférents puisqu'il suffit de changer les organes 15 de support et de positionnement,

c) - or, ce changement peut être réalisé très facilement et rapidement puisque ces organes sont simplement engagés dans les évidements 38 des supports mobiles 14,puis verrouillés au moyen des brides pivotantes 24,

d) - il est possible d'effectuer un réglage très précis de la position de ces divers organes d'appui en utilisant des tableaux de mesure et de consignes spécifiques à chaque type de véhicule. Il convient alors de commencer par la mise en place de la première traverse 5 dont les changements de position correspondent aux écarts modulaires prévus entre .les trous 13,puis de régler la mise en place de la traverse mobile 5a qui peut être placée dans toutes positions intermédiaires voulues, grâce à sa fixation sur des semellesintermédiaires30 et au passage des boulons de fixation 12a à travers les lumières longitudinales 33.

e) les supports mobiles 14 et 14a peuvent être placés dans toutes positions voulues dans le sens transversal, et ce avec une grande précision, grâce aux graduations 28 et 28a prévues sur les traverses. Ces supports peuvent alors être placés en regard d'un chiffre de graduation correspondant à la moitié de la cote d'écartement prévue, soit x/2 ou y/2 suivant le cas.

f) il n'est pas nécessaire de prévoir un affichage des cotes dans le sens vertical car les organes amovibles 15, de support et de positionnement, sont usinés en tenant compte des cotes théoriques des tableaux de mesure de chaque type spécifique de véhicule.

g) - si la carrosserie montée sur le marbre de contrôle fait l'objet d'opérations de redressement, les efforts ne sont plus appliqués uniquement sur le bas de celle-ci, mais répartis sur toute la surface de son soubassement.

10

## REVENDICATIONS

1 - Appareillage pour le montage d'une carrosserie de voiture accidentée sur un marbre de contrôle dont les longerons présentent des trous modulaires taraudés, caractérisé en ce qu'il comprend, en combinaison :

- une première traverse (5) portée par deux flasques verticaux (9) solidaires de deux platines (10) susceptibles d'être fixées sur les trous (13) des longerons (11) du marbre de contrôle (1) ;

- deux semelles (30) destinées à être fixées dans le sens longitudinal sur ces mêmes longerons (11) ;

- une seconde traverse (5a), également portée par des flasques verticaux (9a) solidaires de deux platines (10a) pouvant être fixés, en des positions réglables sur ces semelles (30) qui comportent, dans le sens de leur longueur, des trous (32) à écartement modulaire plus faible que les trous des longerons du marbre ;

- quatre supports (14, 14a) de carrosserie montés coulissant sur ces traverses (5, 5a), et aptes à recevoir des organes amovibles (15, 15a) de positionnement, spécifiques à chaque type de carrosserie ;

- l'agencement étant tel que les deux traverses (5, 5a) soient suffisamment surélevées pour permettre la mise en place, sous celles-ci, du châssis horizontal (2) d'un appareil de mesure pouvant reposer sur les longerons (11) du marbre de contrôle (1).

2 - Appareillage selon la revendication 1, caractérisé en ce que les platines (10a) de fixation de la seconde traverse (5a) sur les semelles (30) présentent des fentes longitudinales (33) pour le passage des boulons de fixation correspondants (12a).

3 - Appareillage selon l'une des revendications précédentes, caractérisé en ce que chacun des supports mobiles (14, 14a) porte une plaque de serrage (21, 21a) disposée contre la face inférieure de la paroi supérieure (6, 6a) de la traverse correspondante et assujettie à ce support par des boulons (20, 20a) engagés dans une fente longitudinale (19, 19a) de cette traverse.

4 - Appareillage selon l'une des revendications précédentes, caractérisé en ce que chaque support mobile (14, 14a) comporte un évidement (38) apte à recevoir l'extrémité inférieure de l'organe de positionnement (15, 15a) adapté sur celui-ci et il est prévu une bride pivotante (24) de verrouillage apte à s'appliquer sur une collerette prévue sur cet organe, afin d'immobiliser celui-ci en place.

5 - Appareillage selon la revendication 4, caractérisé en ce que l'évidement (38), destiné à recevoir l'extrémité inférieure d'un organe de positionnement (15, 15a) est situé entre les deux boulons (20, 20a) prévus pour assurer le serrage de la plaque d'immobilisation (21) et la bride de verrouillage (24) est montée pivotante, à l'une de ses extrémités, autour de l'un de ces boulons, cependant que son extrémité opposée comporte une encoche (25) permettant de l'engager sous l'autre boulon pour son blocage en position de verrouillage.

6 - Appareillage selon l'une des revendications précédentes, caractérisé en ce que les platines de fixation (10, 10a) des extrémités des deux traverses (5, 5a) laissent subsister, sur le dessus des longerons (11) du marbre de contrôle, une marge libre destinée à supporter les longs côtés du châssis (2) de l'appareil de mesure utilisé pour effectuer les vérifications voulues.

7 - Appareillage selon l'une des revendications précédentes, caractérisé en ce que les traverses (5, 5a) portent des graduations (28, 28a) permettant de régler très exactement la position des supports mobiles (14, 14a) dans le sens transversal, cependant que les
semelles longitudinales (30) sont pourvues d'une graduation
(34) permettant de régler très exactement la position de
la seconde traverse (5a) dans le sens longitudinal.

*Fig:2*

*Fig:1*

Fig:3

0122200

Fig:4

17
16
20
15
5
6
23 22 14 29
18
28
8
7 19 21
9
H
12 10 12

Fig:7

5a
6a
9a
VIII
12a 10a 12a VIII
34
47 46 45 44 43 42 41 40 39 38 37 36 35 34 33 32 31 30 29 28 27 26
30

Fig:8

9a
12a 33 33 12a
32 32
10a
30

3/4

0122200

Fig:6

Fig:5

Office européen
des brevets

**RAPPORT DE RECHERCHE EUROPEENNE**

Numéro de la demande

EP 84 40 0681

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A-2 384 229 (OLSSON)<br>* En entier * | 1-7 | B 21 D 1/14<br>G 01 B 5/20 |
| X | FR-A-2 423 748 (CELETTE)<br>* En entier * | 1-7 | |
| X | GB-A-2 098 522 (MARCHIO)<br>* En entier * | 1-7 | |
| A | EP-A-0 065 942 (AB SAMEFA) | | |
| A | FR-A-2 349 478 (APPLIED POWER) | | |
| A | FR-A-2 300 489 (UNIVERSAL BENCH) | | DOMAINES TECHNIQUES RECHERCHES (Int. Cl. ³)<br><br>B 21 D<br>G 01 B |

Le présent rapport de recherche a été établi pour toutes les revendications

| Lieu de la recherche | Date d'achèvement de la recherche | Examinateur |
|---|---|---|
| LA HAYE | 29-05-1984 | PEETERS L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82